(19) Europäisches Patentamt / European Patent Office / Office européen des brevets

(11) **EP 2 653 905 A1**

(12) **EUROPEAN PATENT APPLICATION**
published in accordance with Art. 153(4) EPC

(43) Date of publication:
**23.10.2013 Bulletin 2013/43**

(21) Application number: **11849216.4**

(22) Date of filing: **21.11.2011**

(51) Int Cl.:
**G02B 27/22** (2006.01)     **G02B 3/00** (2006.01)
**G02B 3/06** (2006.01)     **G03B 35/24** (2006.01)

(86) International application number:
**PCT/JP2011/076770**

(87) International publication number:
**WO 2012/081362 (21.06.2012 Gazette 2012/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2010 JP 2010282027**

(71) Applicant: **JVC Kenwood Corporation
Yokohama-shi, Kanagawa 221-0022 (JP)**

(72) Inventor: **SAITO, Atsushi
Yokohama-shi
Kanagawa 221-0022 (JP)**

(74) Representative: **Carstens, Dirk Wilhelm
Wagner & Geyer
Gewürzmühlstrasse 5
80538 München (DE)**

(54) **NAKED-EYE STEREOSCOPIC DISPLAY DEVICE**

(57)     An autostereoscopic display apparatus includes a display (11) in which color pixels (13) of different colors are periodically arranged in a horizontal direction and color pixels (13) of an identical color are arranged in a vertical direction, and a plurality of cylindrical lenses (12a to 12c) placed on the display (11) and arranged parallel to each other, through which the color pixels (13) are magnified and observed. When a pixel pitch of the color pixels (13) in the horizontal direction (HL) is defined as px, a lens pitch of the cylindrical lenses (12a to 12c) is defined as L, an inclined angle of boundaries (BL1 to BL3) of the cylindrical lenses (12a to 12c) with respect to the vertical direction (VL) is defined as θ, and m is a positive integer, px, L and θ fulfill the formula (1).

$$(3m-2) \cdot px/\cos\theta < L < (3m-1) \cdot px/\cos\theta \ \dots \ (1)$$

FIG. 2

EP 2 653 905 A1

**Description**

TECHNICAL FIELD

The present invention relates to an autostereoscopic display apparatus by use of parallax in a one-dimensional direction.

BACKGROUND ART

There are conventionally-known methods for changing display images depending on viewing positions in such a manner that an image in a display device such as a printing surface and a liquid crystal panel is segmented in plural viewpoint directions by use of a particular optical member such as a lenticular lens, a slit-type barrier and a lens array. In particular, different display images (parallax images) having a particular parallax with respect to an identical object are configured to be input to each of right and left eyes. Accordingly, a stereoscopic image display apparatus capable of stereoscopic viewing without eyeglasses (hereinafter, referred to as "an autostereoscopic display apparatus") is achieved. Note that, in the present application, a direction to segment an image in a display device into parallax images is principally one dimension in a horizontal direction.

In the case of using the autostereoscopic display apparatus for stereoscopic viewing, the image in the display device is required to be finely segmented into the parallax images in many directions to increase viewpoints, so as to extend a viewing range capable of stereoscopic viewing, and so as to achieve natural stereoscopic effects and smooth motion parallax for allowing for long hours of viewing.

In recent years, the application of stereoscopic viewing by use of parallax  images to digital signage, car navigation systems and the like is being considered for eye catching and visual recognition improvement. In view of such an application, even when a low-resolution display device is used, an image in a display device is required to be segmented into parallax images as finely as possible to achieve natural stereoscopic viewing.

As a measure of such a requirement, the way in which a viewpoint is segmented as finely as possible so that a viewer views any of the segmented viewpoints (multi-view system) is effective, rather than the way of segmenting the viewpoint while assuming the location of the eyes of the viewer in space. However, in the multi-view system that segments the viewpoint in a one-dimensional direction by use of a lenticular lens or a slit-type barrier, resolution in the segmentation direction is significantly reduced when the number of segmentation of an image in a display device to be segmented into parallax images is increased. In other words, in the case in which the image in the display device is segmented into the parallax images in a horizontal direction, a problem of a difference in resolution between the horizontal direction and the vertical direction is caused.

Alternatively, the above- mentioned problem may be solved by properly designing a color pixel arrangement, a base glass and the like to conform to the optical member described above while putting emphasis on stereoscopic viewing. However, in view of coexistence with a two- dimensional view and a matter of cost, a autostereoscopic display apparatus using a widely prevalent display device including color pixels of R (red), G (green) and B (blue) in which the color pixels of the same color are orderly arranged in a vertical direction is being required.

Meanwhile, in Patent Literature 1, a lenticular lens is inclined with respect to a pixel array so as to compose one three- dimensional pixel by use of pixels in a vertical direction in addition to pixels in a horizontal direction. Accordingly, it is reported that a reduction in resolution of a three- dimensional view can be prevented and a balance of  resolution in the horizontal direction and in the vertical direction can be improved.

Patent Literature 2 has further considered an inclined angle of a lenticular lens with respect to a display to evenly use three kinds of color pixels in a horizontal direction. Accordingly, it is reported that a decreases in unevenness of color and luminance can be achieved even when a display device using different color pixels in a horizontal direction, for example, color pixels of respective R (red), G (green) and B (blue) arranged in a stripe state in a vertical direction, is used.

In addition, Patent Literature 3 has considered an inclined angle and a lens pitch of a lenticular lens with respect to a display so that color pixels of the same color are arranged in line in a horizontal direction. Accordingly, Patent Literature 3 describes the result that unevenness of color is not caused even when resolution in the horizontal direction is reduced.

CITATION LIST

PATENT LITERATURE

Patent Literature 1: Japanese Patent Unexamined Publication No. H09-236777
Patent Literature 2: Japanese Patent Unexamined Publication No. 2005-309374
Patent Literature 3: Japanese Patent Unexamined Publication No. 2008-228199

SUMMARY OF THE INVENTION

In an autostereoscopic display apparatus, an enlargement of a lens pitch with respect to a pixel pitch of a display is effective for increasing the number of segmentation of an image in a display device to be segmented into parallax images. However, the resolution effect of the parallax images is reduced because color pixels look larger in proportion to the enlarged lens pitch due to the magnification effect of the lens.

Further, in order to obtain a three- dimensional image having a high resolution effect, the use of a display with a small pixel pitch and high resolution is effective. However, even when a low- cost display with a large pixel pitch and low resolution is used, there is a demand for the maintenance of the high resolution effect with regard to not only a three-dimensional image having a parallax but also a two- dimensional image without a parallax, in addition to naturalness of the images to allow for long hours of viewing. Meanwhile, when a lenticular lens is inclined, the color pixels are magnified due to the magnification effect of the lens with an increase in the pixel pitch. As a result, the resolution effect is reduced as in the case described above because the visually recognized color pixels are magnified.

In addition, a small autostereoscopic display apparatus is being required for toys such as game machines, digital signage for individual products, pinball machines, slot machines, and other display terminals. As in the case described above, there is also a demand for the maintenance of the high resolution effect with regard to not only a three-dimensional image having a parallax but also a two-dimensional image without a parallax in the small autostereoscopic display apparatus. However, since the small autostereoscopic display apparatus has a tendency to be viewed at close range, a unit of magnified color pixels is easily visually recognized. As a result, the resolution effect is reduced.

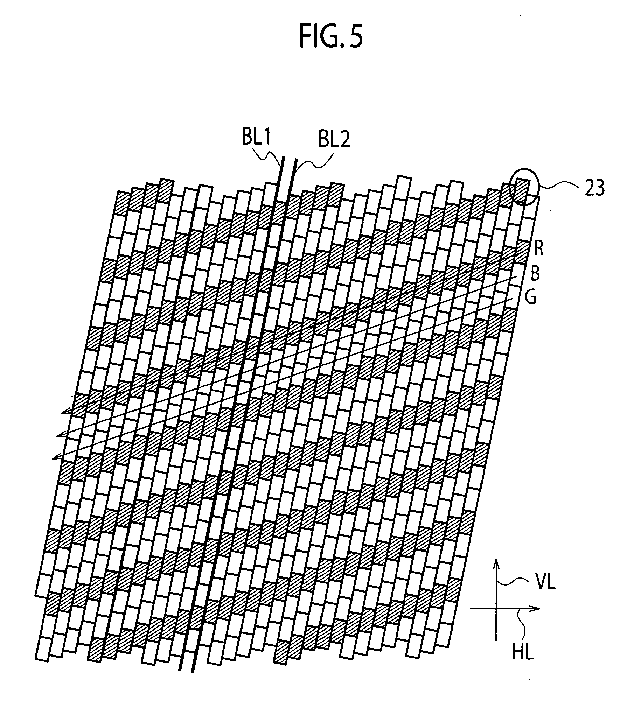

Meanwhile, the following problems have been caused depending on a lens pitch and an inclined angle of a lenticular lens. Here, the problems will be explained with reference to Fig. 5. Plural lenticular lenses are arranged on a display in such a manner that boundaries BL1 and BL2 thereof are inclined, in which color pixels of three different colors of R (red), G (green) and B (blue) are periodically arranged in a horizontal direction HL and color pixels of the same color are arranged in a vertical direction VL. Color pixels 23 of the same color of respective R, G, and B magnified by the lenticular lenses are connected to each other in an oblique direction. As a result, the resolution effect is reduced since the color pixels 23 of the same color connected to each other are visually observed with periodicity. Note that, in Fig. 5, although only the color pixels 23 of R (red) are hatched, the color pixels 23 of each of B (blue) and G (green) are also connected to each other in an oblique direction in the same manner as R (red) .

Here, Patent Literature 3 describes the connection of the color pixels of each color that is made in a horizontal direction. In this case, there is no particular problem if the magnified color pixels 23 are viewed from a sufficiently distant position. However, as described above, in the case in which a display with a large pixel pitch and low resolution or a small display is viewed at close range, the magnified color pixels 23 tend to be easily visually recognized individually in color pixel 23 unit. If the magnified color pixels 23 are periodically connected to each other, the resolution effect is reduced since the color pixels 23 look like moire.

The present invention has been made in view of such conventional problems. An autostereoscopic display apparatus as an aspect of the present invention includes: a display (11) in which color pixels (13) of different colors are periodically arranged in a horizontal direction and color pixels (13) of an identical color are arranged in a vertical direction; and a plurality of cylindrical lenses (12a, 12b, 12c, ⋯) placed on the display (11) and arranged parallel to each other, through which the color pixels (13) are magnified and observed, wherein when a pixel pitch of the color pixels (13) in the horizontal direction (HL) is defined as px, a lens pitch of the cylindrical lenses (12a, 12b, 12c, ⋯) is defined as L, an inclined angle of boundaries (BL1, BL2, BL3, ⋯) of the cylindrical lenses (12a, 12b, 12c, ⋯) with respect to the vertical direction (VL) is defined as θ, and m is a positive integer, px, L and θ fulfill the formula (1).

$$(3m-2) \cdot px/\cos\theta < L < (3m-1) \cdot px/\cos\theta \ldots (1)$$

In the aspect of the present invention, it is preferable that px, L and θ further fulfill the formula (2).
$$L = (3m-3/2) \cdot px/\cos\theta \ldots (2)$$

**EP 2 653 905 A1**

According to the autostereoscopic display apparatus of the present invention, the color pixels of the same color of the display magnified through the cylindrical lenses are not connected to each other, and the color pixels are arranged into approximately a delta sequence. Accordingly, a reduction in resolution when the display is viewed through the cylindrical lenses can be prevented.

BRIEF DESCRIPTION OF THE DRAWINGS

[Fig. 1] Fig. 1(a) is a perspective view showing the entire structure of an autostereoscopic display apparatus according to an embodiment of the present invention, and Fig. 1(b) is an enlarged plan view of an area ME of Fig. 1(a).
[Fig. 2] Fig. 2 is a plan view showing color pixels 13 positioned around lens boundaries BL1 to BL3, and magnified color pixels 23 displayed through a cylindrical lens 12.
[Fig. 3] Fig. 3 is a plan view showing a two-dimensional image without a parallax while simulating the case in which only color pixels of R (red) are lighted at maximum luminance, and color pixels of G (green) and B (blue) are lighted at minimum luminance. Fig. 3(a) shows the case in which px, L and $\theta$ do not fulfill the formula (1), and Fig. 3(b) shows the case in which px, L and $\theta$ fulfill the formula (1).
[Fig. 4] Fig. 4(a) is a plan view showing an arrangement example of magnified color pixels 23 when a horizontal pixel pitch px, a lens pitch L and an inclined angle $\theta$ fulfill only the formula (1), and Fig. 4(b) is a plan view showing an arrangement example of the magnified color pixels 23 when the horizontal pixel pitch px, the lens pitch L and the inclined angle $\theta$ fulfill both the formula (1) and the formula (2).
[Fig. 5] Fig. 5 is a plan view showing the case in which color pixels 23 of each color magnified by cylindrical lenses are connected to each other in an oblique direction and visually recognized with periodicity.

DESCRIPTION OF THE EMBODIMENTS

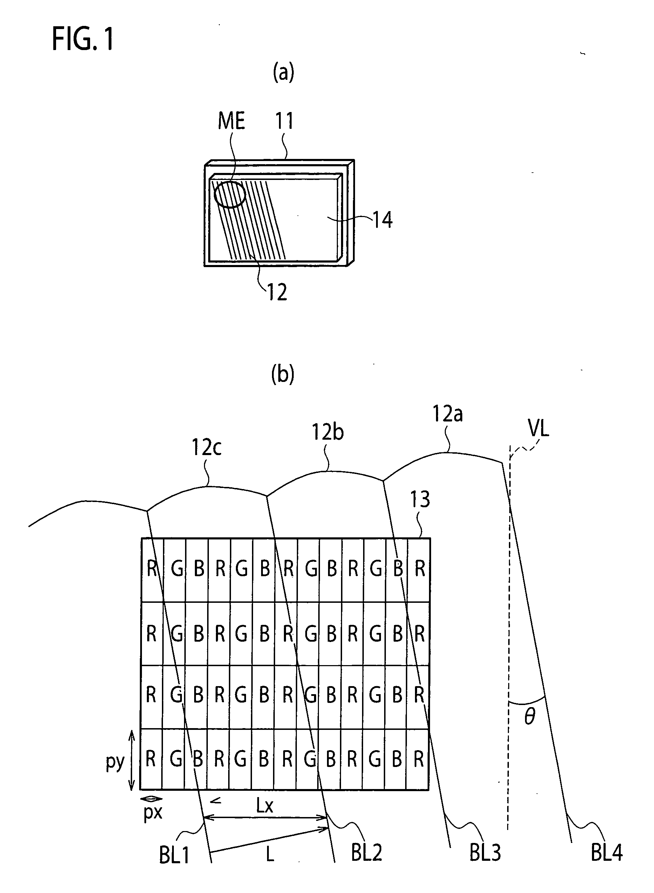

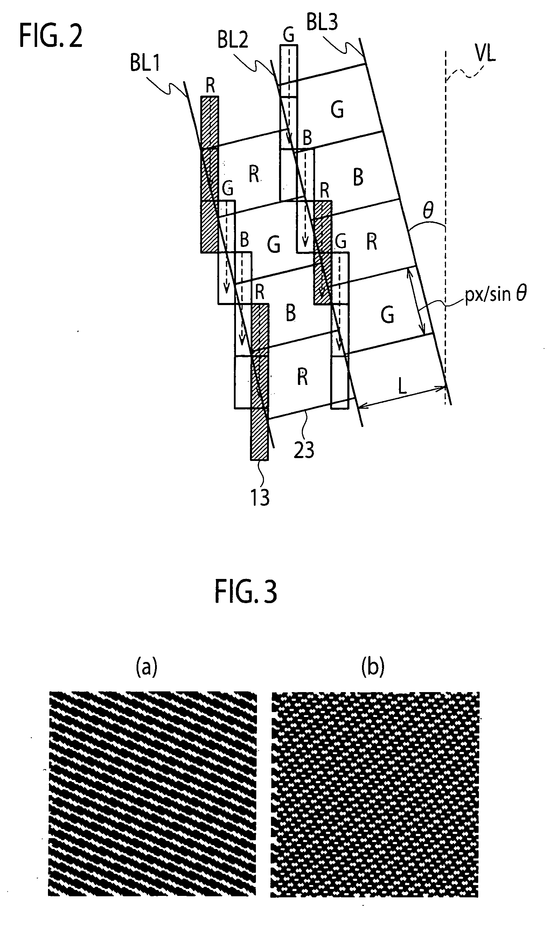

Hereinafter, an embodiment of the present invention will be described with reference to the drawings. Note that the same elements in the figures are indicated by the same reference numerals.
A structure of an autostereoscopic display apparatus according to the embodiment of the present invention will be described with reference to Fig. 1(a) and Fig. 1(b). The autostereoscopic display apparatus according to the embodiment of the present invention includes a display 11 in which color pixels 13 are arranged at a predetermined pitch in a vertical direction VL and in a horizontal direction, respectively, and a lenticular sheet 14 provided on a display surface of the display 11. The lenticular sheet 14 includes plural cylindrical lenses 12a, 12b, 12c, ⋯ arranged parallel to each other in a one-dimensional direction. The color pixels 13 are visually recognized via the plural cylindrical lenses 12. Boundaries BL1 to BL4 of the cylindrical lenses 12 are parallel to each other and inclined with respect to the vertical direction VL of the display 11. The inclined angle is defined as "$\theta$".
The plural rectangular shapes arranged in the vertical direction and in the horizontal direction, respectively, in Fig. 1(b) show the color pixels 13 of the display 11. In the display 11, the color pixels 13 of three different colors of R (red), G (green) and B (blue) are periodically arranged in the horizontal direction, and the color pixels of each color are arranged in the vertical direction. Here, a lens pitch perpendicular to the boundaries BL1 to BL4 of the cylindrical lenses 12 (hereinafter, simply referred to as "a lens pitch") is defined as "L". Similarly, a pixel pitch of each color pixel 13 in the horizontal direction (hereinafter, referred to as "a horizontal pixel pitch") is defined as "px", and a pixel pitch of each color pixel 13 in the vertical direction (hereinafter, referred to as "a vertical pixel pitch") is defined as "py". Although the following description employs the definition of py/px=3, py/px may be other numbers other than 3.  For example, the horizontal pixel pitch px and the vertical pixel pitch py of the display 11 are defined as px=0.1 mm and py=0.3 mm, respectively. The cylindrical lenses 12a, 12b, 12c, ⋯ have a power only in a direction perpendicular to the boundaries BL1 to BL4.
When the color pixels 13 of the display 11 are viewed through the cylindrical lenses 12 in a predetermined direction, only the color pixels 13 equally distant from the boundaries BL1 and BL2 of the cylindrical lenses 12 are visually magnified. The distance of the visible color pixels 13 from boundaries bl1 and bl2 varies depending on the direction to be viewed. Visible color pixels 23 are displayed while being magnified to the same size as the lens pitch L in the direction (power direction) of the lens pitch L of the cylindrical lenses 12. In particular, when all the color pixels are lighted at maximum luminance (white image), the color pixels 23 are visually magnified in a square shape of px/sin$\theta$ and L in the respective parallel and vertical directions to the boundaries BL1 and BL2, as shown in Fig. 2.
In this case, when the horizontal pixel pitch px, the lens pitch L and the inclined angle $\theta$ fulfill the formula (1), the color pixels 23 of the same color of respective R (red), G (green) and B (blue) are arranged into approximately a delta sequence without being connected to each other. As a result, a two-dimensional image having a high resolution effect can be achieved.
In particular, when the lens pitch L is large, the color pixels 23 are magnified because of the magnification effect of the cylindrical lenses 12. As a result, each of the color pixels 23 of R, G and B tends to be easily recognized. However, by defining px, L and θ by the formula (1), the color pixels 23 of the same color of the display 11 visually recognized through the cylindrical lenses 12 are arranged into a delta sequence. Accordingly, a two-dimensional image with a high resolution effect can be achieved.

$$(3m-2)\cdot px/\cos\theta < L < (3m-1)\cdot px/\cos\theta$$

$$(m \text{ is a positive integer}) \dots (1)$$

As an example, the inclined angle θ and the lens pitch L are set to θ=11.77° and L=0.779 mm, respectively. In this case, the formula (1) is fulfilled when m is 3. Therefore, the color pixels 23 of the same color magnified and displayed through the cylindrical lenses 12 are arranged in a similar state to the delta sequence. Accordingly, an image with a high resolution effect can be achieved even when the color pixels are magnified because of the magnification effect of the lenses.

Fig. 3 is a two-dimensional image without a parallax simulating the case in which only the color pixels 13 of R (red) are lighted at maximum luminance, and the color pixels 13 of respective G (green) and B (blue) are lighted at minimum luminance. Fig. 3(a) shows a two-dimensional image when using lenticular lenses of θ=11.77° and L=0.664 mm as an example of the case in which px, L and θ do not fulfill the formula (1), that is, there is no m to fulfill the formula (1). It is recognized that the color pixels 23 of the same color (in this case, red only) magnified due to the magnification effect of the lenses are connected to each other and therefore, the arrangement of the color pixels 23 of the same color shows periodicity. As a result, the resolution effect of the two-dimensional image is reduced.

Meanwhile, Fig. 3 (b) shows a two- dimensional image when using the cylindrical lenses 12 of θ=11.77° and L=0.779 mm as an example of the case in which px, L and θ fulfill the formula (1) . In this case, m is 3, and px, L and θ are defined according to the formula (1) . Although the lens pitch L is large, it can be seen that the color pixels 23 of the same color (in this case, only red) magnified due to the magnification effect of the lenses are separately arranged into a delta sequence. Accordingly, a two- dimensional image with a high resolution effect is obtained. Namely, even if the color pixels 23 are easily visually recognized individually because of the magnification effect of the lenses, a two-dimensional image with a relatively high resolution effect can be achieved.

Further, it is preferable that px, L and θ approximately fulfill the formula (2) in addition to the formula (1) .

$$L=(3m-3/2)\cdot px/\cos\theta \dots (2)$$

As described above, according to the embodiment of the present invention, the following effects can be achieved.

When the horizontal pixel pitch px, the lens pitch L and the inclined angle θ fulfill the formula (1), the color pixels 23 of the same color of the display 11 magnified through the cylindrical lenses 12 are not connected to each other but arranged into approximately a delta sequence. Therefore, a reduction in resolution when viewing the display 11 through the cylindrical lenses 12 can be prevented. This is particularly effective in the case in which the color pixels 23 magnified through the cylindrical lenses 12 are easily visually recognized per color pixel unit, such as the case in which an inexpensive display 11 with a large pixel pitch of the color pixels 13 or a display 11 with low resolution is viewed, and the case in which a small display 11 is viewed at close range.

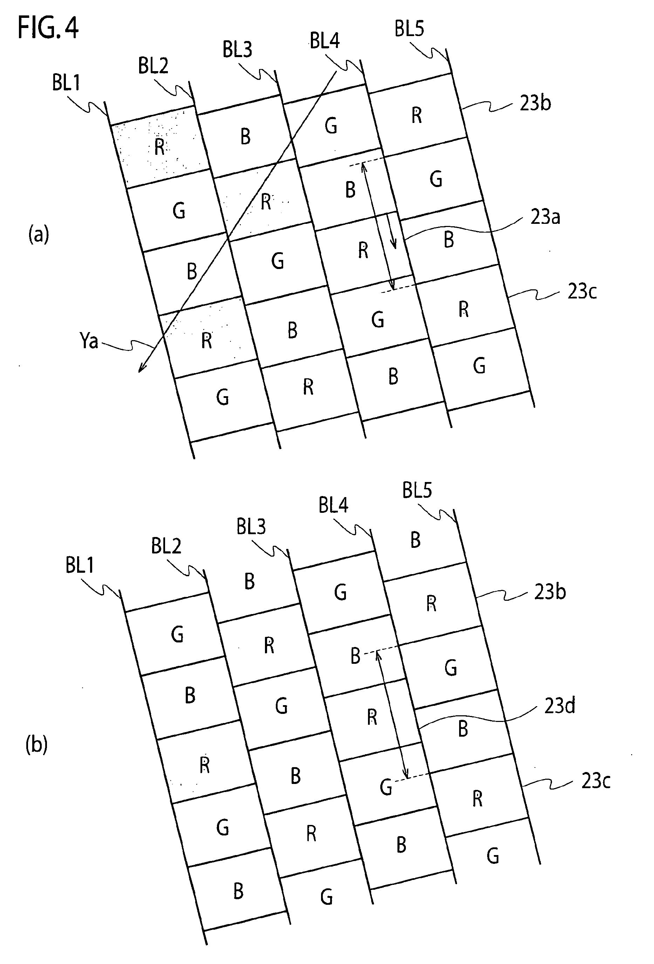

Fig. 4(a) is an arrangement example of the magnified color pixels 23 when the horizontal pixel pitch px, the lens pitch L and the inclined angle θ fulfill only the formula (1). In the case of fulfilling only the formula (1), the color pixels 23 of the same color are not connected to each other. However, a color pixel 23a in the cylindrical lens 12 is located at an offset position from the middle between a color pixel 23b and the color pixel 23c of the same color arranged in the same cylindrical lens 12 adjacent to the cylindrical lens 12 of the color pixel 23a. As a result, the color pixels 23 may show slight periodicity in the direction indicated by an arrow Ya.

Meanwhile, Fig. 4 (b) is an arrangement example of the magnified color pixels 23 when the horizontal pixel pitch px, the lens pitch L and the inclined angle θ fulfill both the formula (1) and the formula (2) . In the case of fulfilling both the formula (1) and the formula (2), a color pixel 23d in the cylindrical lens 12 is located exactly in the middle between the color pixel 23b and the color pixel 23c of the same color arranged in the same cylindrical lens 12 adjacent to the cylindrical lens 12 of the color pixel 23d. As a result, the arrangement of the color pixels 23 of the same color hardly shows periodicity, and in- plane uniformity of frequency characteristics is increased. Accordingly, a reduction in resolution can be further prevented not only because the magnified color pixels 23 of the same color of the display 11 are not connected to each other, but also because the color pixels 23 of the same color can be most visually recognized without periodicity.

The present invention has been described by reference to one embodiment; however, it should be recognized that the present invention is not limited to the description and the drawings composing part of this disclosure. Various alternative embodiments, examples and operational techniques will be apparent to one of ordinary skill in the art from this disclosure.

Although the liquid crystal display (LCD) panel and the color LCD display device were mentioned as an example of the display 11, other displays such as a cathode-ray tube (CRT), a plasma display, an electronic paper and an EL (electroluminescence) display may be used.

The embodiment has been described in the case in which the display 11 including the color pixels 13 of three colors of R, G and B that are periodically arranged in a horizontal direction is used. However, the present invention can also be applied to the case in which the color pixels 13 of four colors further including Y (yellow) or more kinds of colors are periodically arranged in a horizontal direction.

The present application is based on Japanese Patent Application No. P2010-282027 (filed on December 17, 2010) and the entire content thereof is herein incorporated by reference.

INDUSTRIAL APPLICABILITY

The autostereoscopic display apparatus according to the embodiment of the present invention includes the display 11 in which the color pixels 13 of the different colors are periodically arranged in the horizontal direction and the color pixels 13 of the same color are arranged in the vertical direction, and a plurality of the cylindrical lenses 12a to 12c placed on the display 11 and arranged parallel to each other, through which the color pixels 13 are magnified and observed. When the pixel pitch of the color pixels 13 in the horizontal direction HL is defined as px, the lens pitch of the cylindrical lenses 12a to 12c is defined as L, the inclined angle of the boundaries BL1 to BL3 of the cylindrical lenses 12a to 12c with respect to the vertical direction VL is defined as $\theta$, and m is a positive integer, px, L and $\theta$ fulfill the formula (1) described above. Accordingly, a reduction in resolution when viewing the display 11 through the cylindrical lenses 12a to 12c can be prevented. Thus, the autostereoscopic display apparatus according to the embodiment of the present invention is industrially applicable.

REFERENCE SIGNS LIST

| | |
|---|---|
| 11 | Display |
| 12, 12a to 12c | Cylindrical lens |
| 13 | Color pixel |
| 23 | Magnified color pixel |
| BL1 to BL4 | Boundary |
| HL | Horizontal direction |
| L | Lens pitch |
| px | Horizontal pixel pitch (pixel pitch in horizontal direction) |
| py | Vertical pixel pitch (pixel pitch in vertical direction) |
| VL | Vertical direction |
| $\theta$ | Inclined angle |

**Claims**

1. An autostereoscopic display apparatus, comprising:

   a display in which color pixels of different colors are periodically arranged in a horizontal direction and color pixels of an identical color are arranged in a vertical direction; and
   a plurality of cylindrical lenses placed on the display and arranged parallel to each other, through which the color pixels are magnified and observed,
   wherein when a pixel pitch of the color pixels in the horizontal direction is defined as px, a lens pitch of the cylindrical lenses is defined as L, an inclined angle of boundaries of the cylindrical lenses with respect to the vertical direction is defined as $\theta$, and m is a positive integer, the px, L and $\theta$ fulfill the formula (1).

$$(3m-2)\cdot px/\cos\theta < L < (3m-1)\cdot px/\cos\theta \ \dots \ (1)$$

2. The autostereoscopic display apparatus according to claim 1, wherein the px, L and $\theta$ fulfill the formula (2).

$$L=(3m-3/2)\cdot px/\cos\theta \ \dots \ (2)$$

# FIG. 1

(a)

(b)

FIG. 2

FIG. 3

(a)                    (b)

# FIG.4

(a)

(b)

# FIG.5

<table>
<tr><td colspan="2"><strong>INTERNATIONAL SEARCH REPORT</strong></td><td>International application No.<br>PCT/JP2011/076770</td></tr>
</table>

**A. CLASSIFICATION OF SUBJECT MATTER**
*G02B27/22*(2006.01)i, *G02B3/00*(2006.01)i, *G02B3/06*(2006.01)i, *G03B35/24*(2006.01)i

According to International Patent Classification (IPC) or to both national classification and IPC

**B. FIELDS SEARCHED**

Minimum documentation searched (classification system followed by classification symbols)
G02B27/22, G02B3/00, G02B3/06, G03B35/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
Science Direct, JSTPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 2005-309374 A (Japan Science and Technology Agency),<br>04 November 2005 (04.11.2005),<br>entire text; all drawings<br>& US 2007/188517 A1 & EP 1729164 A1 | 1,2 |
| A | JP 2008-228199 A (Toshiba Corp.),<br>25 September 2008 (25.09.2008),<br>entire text; all drawings<br>& US 2008/225113 A1 & EP 1971159 A2 | 1,2 |
| A | JP 2009-48116 A (Sony Corp.),<br>05 March 2009 (05.03.2009),<br>entire text; all drawings<br>& US 2009/052027 A1 | 1,2 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 December, 2011 (13.12.11) | Date of mailing of the international search report<br>20 December, 2011 (20.12.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/076770

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-249954 A  (Sony Corp.),<br>04 November 2010 (04.11.2010),<br>entire text; all drawings<br>& US 2010/259697 A1 | 1,2 |

Form PCT/ISA/210 (continuation of second sheet) (July 2009)

**EP 2 653 905 A1**

**Patent documents cited in the description**

- JP H09236777 B
- JP 2005309374 A
- JP 2008228199 A
- JP P2010282027 B